# EUROPÄISCHE PATENTANMELDUNG

(11) **EP 2 596 921 A1**
(43) Veröffentlichungstag der Anmeldung: **29.05.2013**
(21) Anmeldenummer: 11075266.4
(22) Anmeldetag: 25.11.2011
(51) Int. Cl.: B25J 9/00, B25J 15/04, B25J 19/00

(54) **Multikupplungssystem zum Verbinden von mehreren Werkzeugen mit mindestens einer Versorgungseinheit**

(71) Anmelder: Staeubli Tec-Systems GmbH, 95448 Bayreuth (DE)
(72) Erfinder: Kohler, Wolfgang, 91257 Pegnitz/Trockau (DE)
(74) Vertreter: Pfenning, Meinig & Partner GbR

(57) **Zusammenfassung**

Die vorliegende Erfindung betrifft ein Multikupplungssystem (7) zum Verbinden von mehreren von mindestens zwei Robotern (41, 42, 43) aufnehmbaren und an den Robotern (41, 42, 43) befestigbaren Werkzeugen (31, 32, 33, 34, 35, 36, 37, 38) mit mindestens einer Versorgungseinheit (21, 22, 23, 24, 25, 26, 27, 28). Das Multikupplungssystem (7) umfasst mehrere jeweils auf einer werkzeugseitigen Führung (101, 102, 103) bewegbare werkzeugseitige Kupplungselemente (111, 112, 113), die Anschlüsse (201, 202, 203, 204, 205, 206, 207, 209, 211) für Medien aufweisen. Weiter umfasst das Multikupplungssystem (7) mehrere jeweils auf einer versorgerseitigen Führung (141, 142, 143, 144, 145, 146, 147, 148) bewegbare versorgerseitige Kupplungselemente (151, 152, 153, 154, 155, 156, 157, 158) mit einer Mehrzahl von Anschlüssen (201, 202, 203, 204, 205, 206, 207, 209, 211), wobei die Anschlüsse (201, 202, 203, 204, 205, 206, 207, 209, 211) entsprechend mit denjenigen Medien belegt sind, mit denen die unterschiedlichen an den Robotern (41, 42, 43) befestigbaren Werkzeuge (31, 32, 33, 34, 35, 36, 37, 38) zu versorgen sind.

## Beschreibung

Die vorliegende Erfindung betrifft ein Multikupplungssystem zum Verbinden von mehreren an Robotern befestigbaren Werkzeugen mit mindestens einer Versorgungseinheit und ein Verfahren zum Betreiben eines Multikupplungssystems.

Kupplungssysteme dienen dazu, mehrere Medien, wie Druckluft oder Strom, von einer die Medien bereitstellenden Vorrichtung zu einem Verbraucher zu leiten. Hierbei zeichnen sich Kupplungssysteme durch eine Vielzahl von Anschlüssen für verschiedene Medien und die Möglichkeit, unterschiedliche Verbraucher mit unterschiedlichen Versorgern verbinden zu können, aus.

Derartige Kupplungssysteme werden bevorzugt bei Industrierobotern eingesetzt, da bei diesen Geräten eine Vielzahl von verschiedenen Werkzeugen, wie beispielsweise Schweißwerkzeugen, in unterschiedlicher Reihenfolge an einem der Roboter angebracht werden und mit entsprechenden Medien versorgt werden müssen. Hier bietet es sich an, die Kupplungssysteme mit verschiedenen Anschlüssen einzusetzen, sodass die Werkzeuge möglichst schnell an den Roboter anbringbar und von diesem lösbar sind und gleichzeitig mit den benötigten Medien versorgt werden.

Nachteilig an den bislang verwendeten Kupplungssystemen ist allerdings, dass das Trennen und erneute Verbinden einzelner Kupplungselemente umständlich und mitunter langwierig ist, da von jedem Roboter, der ein Werkzeug aufnimmt, ein separater Kabelsatz zu einer Versorgungseinheit des Werkzeugs läuft. Zusätzlich muss bei einer Konstruktion des Roboters auf ausreichenden Platz für das Kupplungssystem geachtet werden.

Der vorliegenden Erfindung liegt damit die Aufgabe zugrunde, ein Multikupplungssystem vorzuschlagen, das die genannten Nachteile vermeidet, mit dem also einfach, schnell und zuverlässig mehrere Werkzeuge mit den benötigten Medien versorgt werden können.

Diese Aufgabe wird erfindungsgemäß gelöst durch ein Multikupplungssystem mit den Merkmalen des Hauptanspruchs sowie ein Verfahren zum Betreiben eines Multikupplungssystems. Vorteilhafte Ausgestaltungen und Weiterbildungen sind in den abhängigen Ansprüchen beschrieben.

Ein Multikupplungssystem zum Verbinden von mehreren von mindestens zwei Robotern jeweils aufnehmbaren und an den mindestens zwei Robotern befestigbaren Werkzeugen mit mindestens einer Versorgungseinheit der Werkzeuge, die eine Mehrzahl von Medien zur Versorgung der Werkzeuge bereitstellt, umfasst mehrere werkzeugseitige Kupplungselemente und mehrere versorgerseitige Kupplungselemente. Die werkzeugseitigen Kupplungselemente sind jeweils auf einer werkzeugseitigen Führung bewegbar, d. h. jedes der werkzeugseitigen Kupplungselemente ist auf einer der werkzeugseitigen Führungen geführt. Entsprechend sind die versorgerseitigen Kupplungselemente jeweils auf einer versorgerseitigen Führung bewegbar. Die werkzeugseitigen Führungen und die versorgerseitigen Führungen verlaufen in unterschiedlichen Richtungen. Die werkzeugseitigen Kupplungselemente weisen Anschlüsse für die Medien auf, die die jeweils an den Robotern befestigbaren Werkzeuge versorgen. Die versorgerseitigen Kupplungselemente weisen ebenfalls eine Mehrzahl von Anschlüssen auf. Diese Anschlüsse sind entsprechend mit denjenigen Medien belegt, mit denen die unterschiedlichen an den Robotern befestigbaren Werkzeuge zu versorgen sind. Die werkzeugseitigen Kupplungselemente und die versorgerseitigen Kupplungselemente sind auf ihren jeweiligen Führungen in Positionen bewegbar, in denen jeweils eines der versorgerseitigen Kupplungselemente und eines der werkzeugseitigen Kupplungselemente einander gegenüberliegen. Durch eine Relativbewegung in Richtung des jeweils anderen Kupplungselements sind diese Kupplungselemente zu einer Kupplungseinheit zusammenfügbar. Über die Kupplungseinheit können anschließend die gewünschten Medien von der Versorgungseinheit zu dem jeweiligen Werkzeug geleitet werden.

Das Multikupplungssystem weist den Vorteil auf, dass mehrere Werkzeuge über ihr jeweiliges werkzeugseitiges Kupplungselement nacheinander je nach Bedarf mit verschiedenen versorgerseitigen Kupplungselementen, also in mehreren Kombinationen, verbunden werden können durch Bewegen der Kupplungselement auf der jeweiligen Führung. Hierdurch wird die Variabilität erhöht und das Verbinden kann durch die Führung zuverlässiger und schneller erfolgen, was eine Taktzeit optimiert, die Arbeitssicherheit steigert und zur Einhaltung von Qualitätsstandards dient. Außerdem können mehrere Werkzeuge an einen der Roboter befestigt werden, während lediglich ein Kabelsatz an das werkzeugseitige Kupplungselement läuft, über die die Medien zum Werkzeug geleitet werden, wodurch auf zusätzliche Kabelsätze verzichtet werden kann und sich eine konstruktive Auslegung des jeweiligen Roboters vereinfacht sowie weniger Ersatzteile vorgehalten werden müssen.

Die Anschlüsse der werkzeugseitigen Kupplungselemente und die Anschlüsse der versorgerseitigen Kupplungselemente sind vorzugsweise jeweils unterschiedlich belegt, wobei das werkzeugseitige Kupplungselement in besonders vorteilhafter Weise Anschlüsse für sämtliche von der Versorgungseinheit bereitgestellten Medien aufweist. Die Anschlüsse der versorgerseitigen Kupplungselemente sind zwar so ausgelegt, dass die Kupplungseinheit gebildet werden kann, es müssen allerdings nicht alle vorgesehenen Anschlüsse wirklich mit der Versorgungseinheit verbunden sein. Lediglich die zum Betrieb des zugeordneten Werkzeugs notwendigen Anschlüsse sind in diesem Fall auch mit Medien belegt.

Die werkzeugseitigen Führungen und bzw. oder die versorgerseitigen Führungen können jeweils parallel zueinander angeordnet sein, um einen platzsparenden Aufbau zu gewährleisten. Zudem wird somit ein Bewegen der jeweiligen Kupplungselemente auf den Führungen erleichtert, da alle versorgerseitigen Kupplungselemente parallel in einer Richtung geführt werden und alle werkzeugseitigen Kupplungselement parallel in einer weiteren Richtung.

Es kann auch vorgesehen sein, dass die werkzeugseitigen Führungen und die versorgerseitigen Führungen rechtwinklig zueinander angeordnet sind. Hierdurch ergibt sich für jedes Paar einer werkzeugseitigen Führung und einer versorgerseitigen Führung genau ein Kreuzungspunkt, an dem sich die Kupplungseinheit herstellen lässt. Zudem sind die versorgerseitigen Kupplungselemente und die werkzeugseitigen Kupplungselemente eindeutig in verschiedenen Richtungen bewegbar. Besonders vorzugsweise sind die versorgerseitigen Führungen horizontal angeordnet und die werkzeugseitigen Führungen vertikal bzw. die werkzeugseitigen Führungen horizontal und die versorgerseitigen Führungen vertikal.

In einer vorteilhaften Ausgestaltung verlaufen die versorgerseitigen Führungen oder die werkzeugseitigen Führungen radial. Die auf diesen kreisförmigen Führungen geführten Kupplungselemente sind somit auf einer Kreisbahn bewegbar, während die nicht radial geformten Führungen linear verlaufend kreisförmig um die radialen Führungen angeordnet sind. Diese Anordnung erlaubt es, das Multikupplungssystem platzsparend aufzubauen, insbesondere, wenn zwar ausreichend Platz nach oben zur Verfügung steht, allerdings ein Grundriss des Multikupplungssystem eine bestimmte Fläche nicht überschreiten darf.

Die versorgerseitigen Führungen und bzw. oder die werkzeugseitigen Führungen können jeweils mindestens eine Rastposition aufweisen, in die die auf der jeweiligen Führung geführten Kupplungselemente einrastbar sind. Dies bietet den Vorteil, die Kupplungselement in definierten Positionen anbringen zu können.

Um die werkzeugseitigen Führungen und die versorgerseitigen Führungen wartungsarm zu halten, können sie als Kunststoffgleitführungen gestaltet sein. Die Führungen können auch eine Führungsschiene, eine Führungsnut oder eine Führung durch ein Kugellager umfassen.

Zum Ansteuern und Bewegen der werkzeugseitigen Kupplungselemente und der versorgerseitigen Kupplungselement kann das Multikupplungssystem eine Steuereinheit aufweisen. Durch die Steuereinheit kann das Multikupplungssystem vollautomatisiert betrieben werden. In vorteilhafter Weise ist die Steuereinheit dazu eingerichtet, mehrere werkzeugseitigen Kupplungselemente und/oder mehrere versorgerseitige Kupplungselemente gleichzeitig zu bewegen. Hierdurch können gleichzeitig mehrere Kupplungseinheiten gebildet werden, was eine Geschwindigkeit von Kupplungsvorgängen erhöht.

Die Anschlüsse der Kupplungselemente umfassen typischerweise mindestens einen Anschluss für einen Strom, der vorzugsweise ein Leistungsstrom oder ein Steuerstrom ist, eine Spannung, Luft, insbesondere Druckluft, Wasser, ein Kühlmedium, eine Hydraulikflüssigkeit und bzw. oder einen Lichtwellenleiter. Die genannten Medien werden üblicherweise bei an Industrierobotern befestigbaren Werkzeugen eingesetzt und erlauben ein Durchführen unterschiedlicher Tätigkeiten durch das Werkzeug. Es können auch mehrere Anschlüsse für ein gleiches Medium vorgesehen sein, wobei das Medium in seinen Parametern variierbar ist.

Jedes der Kupplungselemente umfasst vorzugsweise eine Platte, auf der die Anschlüsse angeordnet sind. Die Platten der werkzeugseitigen Kupplungselemente und der versorgerseitigen Kupplungselemente sind mit einer gleichen Anzahl von Aussparungen so versehen, dass werkzeugseitige Kupplungselemente und versorgerseitige Kupplungselemente miteinander koppelbar sind. Außerdem können Vorrichtungen wie Zapfen und Aussparungen auf den Platten angeordnet sein, die nur bei passgenauem Übereinstimmen das Verbinden zur Kupplungseinheit ermöglichen.

Vorzugsweise existieren mehrere Versorgungseinheiten, die zur Versorgung jeweils eines der Werkzeuge dienen. Hierdurch können für dieses Werkzeug genau die benötigten Medien zur Verfügung gestellt werden.

In einer besonders vorteilhaften Weiterbildung entspricht eine Anzahl der Werkzeuge einer Anzahl von Versorgungseinheiten, sodass jedes der Werkzeuge einer der Versorgungseinheiten eindeutig zuordenbar ist.

Zum Bewegen der werkzeugseitigen Kupplungselemente auf den jeweiligen werkzeugseitigen Führungen und bzw. oder den versorgerseitigen Werkzeugelementen auf den versorgerseitigen Führungen kann das Multikupplungssystem einen ersten Antrieb umfassen. Dieser erste Antrieb umfasst vorzugsweise einen Elektromotor, der einen Zahnriemen oder eine Spindel antreibt. Der erste Antrieb kann aber auch ein pneumatischer Antrieb oder hydraulischer Antrieb sein. Aufgrund einer einfacheren Wartung ist der Zahnriemen in besonders vorteilhafter Weise einsetzbar, allerdings ermöglicht auch die Spindel eine exakte Positionierung und ein schnelles Verfahren des jeweils angetriebenen Kupplungselements. Der Elektromotor ist in vorteilhafter Weise in Schrittmotor.

Es kann vorgesehen sein, dass das Multikupplungssystem zum Durchführen der Relativbewegung, durch die die Kupplungseinheit gebildet oder getrennt wird, also eines der werkzeugseitigen und eines der versorgerseitigen Kupplungselemente miteinander verbunden werden, einen zweiten Antrieb aufweist. Dieser zweite Antrieb kann an mindestens einem der Kupplungselemente angeordnet sein. Hierdurch muss nur eines der beiden Kupplungselemente zum Bilden der Kupplungseinheit in der Relativbewegung bewegt werden. In besonders vorteilhafter Weise umfasst der zweite Antrieb einen pneumatisch betriebenen Zylinder, durch den die Kupplungseinheit schnell und sicher gebildet und auch wieder getrennt werden kann. Alternativ kann der zweite Antrieb auch einen elektrischen oder einen hydraulischen Antrieb umfassen.

In einer vorteilhaften Weiterbildung sind die als Kupplungseinheiten zusammengefügten werkzeugseitigen Kupplungselemente und die versorgerseitigen Kupplungselemente miteinander verriegelbar. Die Kupplungseinheit ist hierdurch gegen unerwünschtes und unbeabsichtigtes Trennen gesichert. In besonders vorteilhafter Weise ist eine automatisierte Verriegelung vorgesehen. Die Verriegelung erfolgt vorzugsweise durch den zweiten Antrieb.

Das gesamte Multikupplungssystem ist in vorteilhafter Weise unter einer Abdeckung angeordnet. Hierdurch ist ein Eingreifschutz gegeben, was aus Gründen einer erhöhten Arbeitssicherheit vorteilhaft ist. Zudem ist das Multikupplungssystem somit gegen eine Verschmutzung geschützt.

Ein Verfahren zum Betreiben eines Multikupplungssystem zum Verbinden von mehreren von mindestens zwei Robotern jeweils aufnehmbaren und an den mindestens zwei Robotern befestigbaren Werkzeugen mit mindestens einer Versorgungseinheit, wobei das Multikupplungssystem mehrere jeweils auf einer werkzeugseitigen Führung bewegbare werkzeugseitige Kupplungselemente, die Anschlüsse für die Medien aufweisen, die die jeweils an den Roboter befestigbaren Werkzeuge versorgen, und mehrere jeweils auf einer versorgerseitigen Führung bewegbare versorgerseitige Kupplungselemente mit einer Mehrzahl von Anschlüssen aufweist, umfasst mehrere Schritte. Zunächst wird mindestens eines der werkzeugseitigen Kupplungselemente und bzw. oder der versorgerseitigen Kupplungselemente derart auf der jeweiligen Führung bewegt, dass das mindestens eine werkzeugseitige Kupplungselement und das mindestens eine versorgerseitige Kupplungselement einander gegenüberliegen.

Anschließend werden in einem weiteren Schritt das mindestens eine werkzeugseitige und das mindestens eine versorgerseitige Kupplungselement zusammengefügt und bildet eine Kupplungseinheit. Das Zusammenfügen erfolgt durch eine Relativbewegung mindestens eines der beiden Kupplungselemente in Richtung des jeweils anderen Kupplungselements. Die Kupplungseinheit wird durch eine Relativbewegung mindestens eines der beiden Kupplungselemente in eine von dem jeweils anderen der beiden Kupplungselemente wegweisenden Richtung getrennt.

Schließlich wird das mindestens eine werkzeugseitige Kupplungselement und bzw. oder das mindestens eine versorgerseitige Kupplungselement auf der jeweiligen Führung derart bewegt, dass zumindest eines der beiden Kupplungselemente einem weiteren Kupplungselement der jeweils anderen Art gegenüberliegt und mit diesem weiteren Kupplungselement zu einer weiteren Kupplungseinheit zusammengefügt werden kann.

Vorzugsweise beträgt eine Zeit zwischen dem Trennen des mindestens einen werkzeugseitigen Kupplungselements und des mindestens einen versorgerseitigen Kupplungselements und dem Koppeln des mindestens einen werkzeugseitigen Kupplungselements und bzw. oder des mindestens einen versorgerseitigen Kupplungselements mit einem weiteren Kupplungselement der jeweils anderen Art maximal 10 Sekunden und erlaubt somit ein schnelles Trennen und Bilden der Kupplungseinheiten sowie Bewegen der Kupplungselemente.

Das Verfahren wird vorzugsweise mit dem vorgeschlagenen Multikupplungssystem durchgeführt.

Ausführungsbeispiele der Erfindung sind in den Zeichnungen dargestellt und werden nachfolgend anhand der Figuren 1 bis 22 erläutert.

Es zeigen:
- Fig. 1: eine perspektivische Ansicht einer Anordnung eines unter einer Abdeckung befindlichen Multikupplungssystems mit mehreren Versorgungseinheiten, Robotern und Werkzeugen;

- Fig. 2: eine Aufsicht auf die in Fig. 1 gezeigte Anordnung;
- Fig. 3: eine perspektivische Ansicht des unter der Abdeckung befindlichen Multikupplungssystems;
- Fig. 4: eine perspektivische Ansicht des Multikupplungssystems ohne die Abdeckung von einer den Werkzeugen zugewandten Seite aus;
- Fig. 5: eine perspektivische Ansicht des in Fig. 4 dargestellten Multikupplungssystems ohne die Abdeckung von einer den Versorgungseinheiten zugewandten Seite aus;
- Fig. 6: eine perspektivische Ansicht des Multikupplungssystems ohne Kabelsatzführungen;
- Fig. 7: eine Ansicht des Multikupplungssystem von der den Werkzeugen zugewandten Seite aus;
- Fig. 8: eine Platte eines Kupplungselements;
- Fig. 9: eine seitliche Ansicht des Multikupplungssystems;
- Fig. 10: einen vergrößerten Ausschnitt der in Fig. 9 gezeigten seitlichen Ansicht;
- Fig. 11: eine Aufsicht auf das Multikupplungssystem;
- Fig. 12: eine perspektivische Ansicht eines Ausgangszustands der Kupplungselemente vor Bilden einer Kupplungseinheit;

- Fig. 13: eine Fig. 12 entsprechende Darstellung mit einem verfahrenen werkzeugseitigen Kupplungselement;
- Fig. 14: eine Fig. 13 entsprechende Darstellung mit einer Kupplungseinheit;
- Fig. 15: eine den Fign. 13 und 14 entsprechende Darstellung mit einer getrennten Kupplungseinheit und in neue Positionen bewegte Kupplungselemente;
- Fig. 16: eine den Fign. 13 bis 15 entsprechende Darstellung mit weiteren Kupplungseinheiten und mehreren in neue Positionen bewegten Kupplungselemente;
- Fig. 17: eine Seitenansicht je eines der werkzeugseitigen Kupplungselemente und eines der versorgerseitigen Kupplungselemente;
- Fig. 18: eine Fig. 17 entsprechende Seitenansicht der in Relativbewegung zueinander befindlichen Kupplungselemente;
- Fig. 19: eine den Fign. 17 und 18 entsprechende Darstellung einer Kupplungseinheit;
- Fig. 20: eine Fig. 11 entsprechende Darstellung einer modularen Anordnung des Multikupplungs-systems;
- Fig. 21: in einer schematischen Aufsicht ein karussellförmiges Ausführungsbeispiel des Multikupplungssystems und

- Fig. 22: die in Fig. 21 gezeigte Anordnung in einer perspektivischen Ansicht.

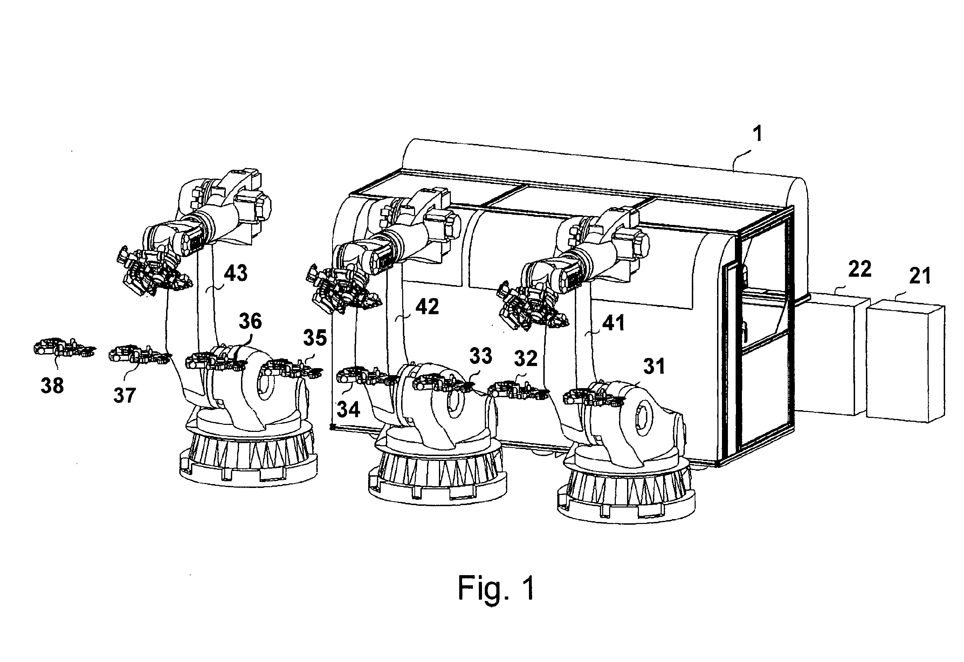

Fig. 1 zeigt in einer perspektivischen Ansicht eine Anordnung aus einem unter einer abnehmbaren Abdeckung 1 verborgenen Multikupplungssystem mit mehreren Versorgungseinheiten, von denen allerdings nur zwei Versorgungseinheiten 21 und 22 nicht von der Abdeckung 1 verdeckt sind, mehreren Werkzeugen 31, 32, 33, 34, 35, 36, 37, 38 und drei Robotern 41, 42, 43. Jeder der Roboter 41, 42, 43 kann eines der Werkzeuge 31, 32, 33, 34, 35, 36, 37, 38 an seinem Roboterarm aufnehmen. Die Roboter 41, 42, 43 sind jeweils Industrieroboter mit sechs Freiheitsgraden. Die an den Robotern 41, 42, 43 befestigbaren Werkzeuge 31, 32, 33, 34, 35, 36, 37, 38 sind für eine Durchführung unterschiedlicher Aufgaben wie beispielsweise Schweißen, Bohren oder Schrauben ausgelegt. Über den Roboterarm bekommen die Werkzeuge 31, 32, 33, 34, 35, 36, 37, 38 zur Ausführung der jeweiligen Aufgabe benötigte Medien über einen Kabelsatz zugeführt. Der Kabelsatz führt in die Abdeckung 1 an das Multikupplungssystem. Von dem Multikupplungssystem führt jeweils ein weiterer Kabelsatz an eine der Versorgungseinheiten, die die benötigten Medien für die Werkzeuge 31, 32, 33, 34, 35, 36, 37, 38 bereithalten. Somit ist eine durchgehende Kabelverbindung zwischen den Versorgungseinheiten und den Werkzeugen 31, 32, 33, 34, 35, 36, 37, 38 geschaffen.

Die Werkzeuge 31, 32, 33, 34, 35, 36, 37, 38 sind typischerweise auf Haltern angeordnet, von denen die Roboter 41, 42, 43 sie aufnehmen und dort auch wieder ablegen können. An jedem der Roboter 41, 42, 43 kann gleichzeitig eines der Werkzeuge 31, 32, 33, 34, 35, 36, 37, 38 befestigt werden.

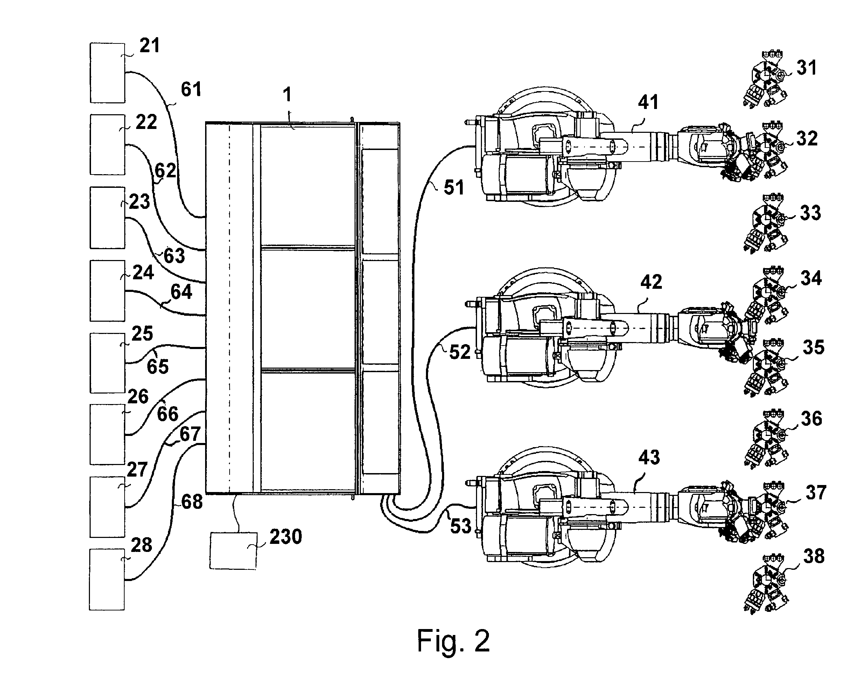

Fig. 2 zeigt die in Fig. 1 bereits dargestellte Anordnung in Aufsicht. Wiederkehrende Merkmale sind in dieser wie auch in den folgenden Figuren mit identischen Bezugszeichen versehen. Die Roboter 41, 42, 43 sind durch die werkzeugseitige Kabelsätze 51, 52, 53 mit dem unter der Abdeckung 1 liegenden Multikupplungssystem verbunden. Die werkzeugseitigen Kabelsätze 51, 52, 53 umfassen mehrere Leitungen für sämtliche von einer der Versorgungseinheiten 21, 22, 23, 24, 25, 26, 27, 28 bereitgestellten Medien, d.h. jedes Medium, das von einer der Versorgungseinheiten 21, 22, 23, 24, 25, 26, 27, 28 bereitgestellt wird, kann über eine in den werkzeugseitigen Kabelsätzen 51, 52, 53 enthaltene Leitung geleitet werden. Die Versorgungseinheiten 21, 22, 23, 24, 25, 26, 27, 28 sind über versorgerseitige Kabelsätze 61, 62, 63, 64, 65, 66, 67, 68 ebenfalls mit dem Multikupplungssystem verbunden und umfassen mehrere Leitungen. Eine Anzahl der Versorgungseinheiten 21, 22, 23, 24, 25, 26, 27, 28 entspricht einer Anzahl der Werkzeuge 31, 32, 33, 34, 35, 36, 37, 38. Somit ist jedem der Werkzeuge 31, 32, 33, 34, 35, 36, 37, 38 genau eine der Versorgungseinheiten 21, 22, 23, 24, 25, 26, 27, 28 zugeordnet und eingerichtet, dieses Werkzeug mit den notwendigen Medien zu versorgen. Die versorgerseitigen Kabelsätze 61, 62, 63, 64, 65, 66, 67, 68 umfassen somit keine Leitungen für sämtliche von einer der Versorgungseinheiten 21, 22, 23, 24, 25, 26, 27, 28 bereitgestellten Medien, sondern nur für diejenigen Medien, die das zugeordnete Werkzeug benötigt.

Das Multikupplungssystem ist über eine Steuereinheit 230, die einen PC umfasst, steuerbar. Die Steuereinheit 230 ist in Fig. 1 nur schematisch eingezeichnet und ist typischerweise innerhalb der Abdeckung 1 angeordnet.

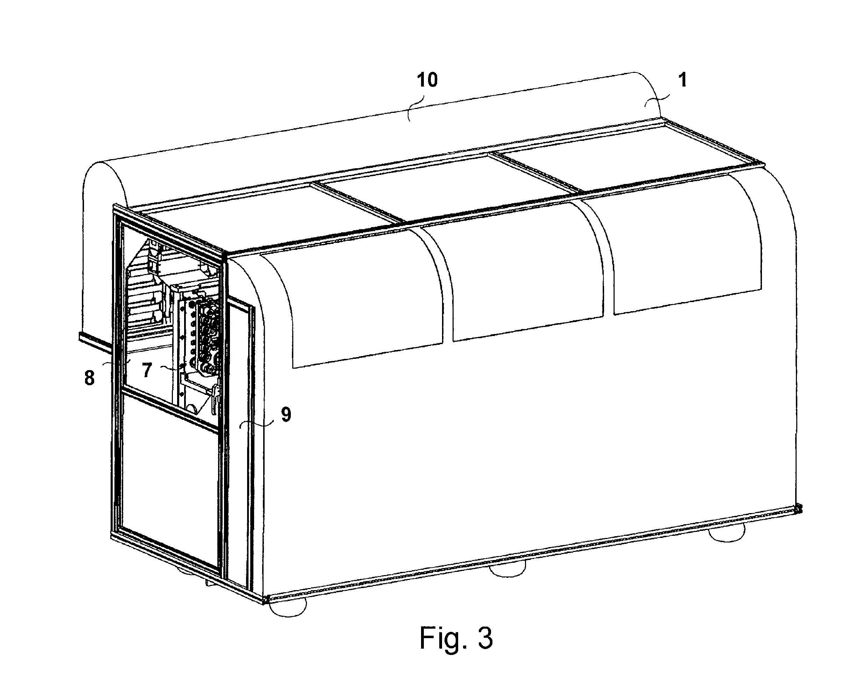

In Fig. 3 ist die Abdeckung 1 mit dem darin enthaltenen Multikupplungssystem 7 gezeigt. Die Abdeckung 1 weist z. B. eine Länge von 2,5 m sowie z. B. eine Breite und eine Höhe von jeweils 2 m auf. Die Abdeckung 1 ist aus einem nicht-transparenten Kunststoff gefertigt, allerdings ist ein transparentes Fenster 8 an einer Seite angebracht, durch welches eine Sichtkontrolle des Multikupplungssystems 7 durchgeführt werden kann. Die von den Robotern 41, 42, 43 kommenden werkzeugseitigen Kabelsätze 51, 52, 53 sind durch eine verschließbare Öffnung 9 auf einer den Werkzeugen 31, 32, 33, 34, 35, 36, 37, 38 angeordneten Seite der Abdeckung 1 in einen Innenraum der Abdeckung 1 führbar. Ebenso ist auf einer den Versorgungseinheiten 21, 22, 23, 24, 25, 26, 27, 28 zugewandten Seite der Abdeckung 1 eine weitere verschließbare Öffnung angeordnet, durch die die versorgerseitigen Kabelsätze 61, 62, 63, 64, 65, 66, 67, 68 in den Innenraum der Abdeckung 1 geführt werden können. Hierzu ist auf der versorgerseitig an der Abdeckung 1 ein kastenförmiger Anbau 10 angebracht, welcher an seiner Unterseite die Öffnung aufweist. Die Abdeckung 1 ist bis auf die genannten Öffnungen komplett geschlossen, um einen Eingriffsschutz zu gewährleisten und das Multikupplungssystem 7 vor Schmutz zu schützen.

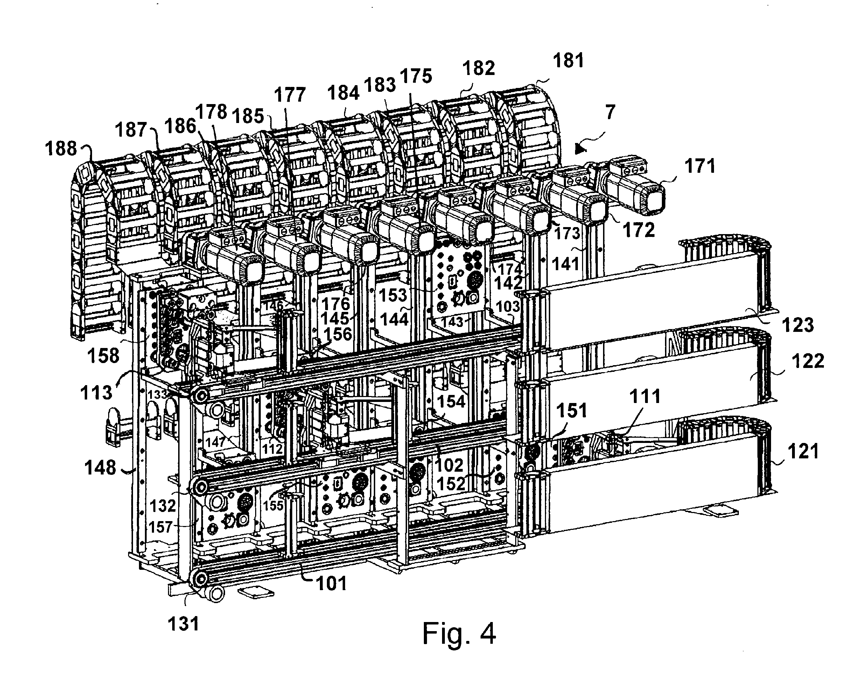

Fig. 4 stellt das Multikupplungssystem 7 in einer perspektivischen Ansicht ohne die Abdeckung 1 werkzeugseitig gesehen dar. Das Multikupplungssystem 7 weist drei werkzeugseitige Führungen 101, 102, 103 auf, denen jeweils ein werkzeugseitiges Kupplungselement 111, 112, 113 in einer Linearbewegung geführt ist. Die werkzeugseitigen Führungen 101, 102, 103 sind parallel zueinander angeordnet und verlaufen horizontal. Die werkzeugseitigen Kupplungselemente 111, 112, 113 sind vorzugsweise in auf den werkzeugseitigen Führungen 101, 102, 103 befindliche Rastpositionen bewegbar. Die werkzeugseitigen Kabelsätze 51, 52, 53 sind mit jeweils einem der werkzeugseitigen Kupplungselemente 111, 112, 113 verbunden, allerdings aus Gründen der Übersichtlichkeit nicht dargestellt. Um die werkzeugseitigen Kabelsätze 51, 52, 53 führen zu können, sind werkzeugseitige Kabelsatzführungen 121, 122, 123 an jeder der werkzeugseitigen Führungen 101, 102, 103 angeordnet, die in ihrem Inneren einen der werkzeugseitigen Kabelsätze 51, 52, 53 aufnehmen und führen.

Die werkzeugseitigen Kupplungselemente 111, 112 und 113 sind über einen ersten Antrieb auf den werkzeugseitigen Führungen 101, 102, 103 bewegbar. Der erste Antrieb besteht aus jeweils einem Elektromotor, der in der in Fig. 4 gezeigten Darstellung durch die werkzeugseitigen Kabelsatzführung 121, 122, 123 verdeckt ist und einen Schrittmotor umfasst, und jeweils einen von dem Elektromotor angetriebenen Zahnriemen 131, 132, 133. Statt der Zahnriemen 131, 132, 133 kann auch jeweils eine Spindel, ein pneumatischer oder ein hydraulischer Antrieb vorgesehen sein. Die Elektromotoren sind an einem Ende der werkzeugseitigen Führungen 101, 102, 103 angeordnet.

Das Multikupplungssystem 7 weist ferner acht versorgerseitige Führungen 141, 142, 143, 144, 145, 146, 147, 148 auf, auf denen jeweils ein versorgerseitiges Kupplungselement 151, 152, 153, 154, 155, 156, 157, 158 in einer Linearbewegung geführt und vorzugsweise in Rastpositionen der versorgerseitigen Führungen 141, 142, 143, 144, 145, 146, 147, 148 bewegbar ist. Die versorgerseitigen Führungen 141, 142, 143, 144, 145, 146, 147, 148 sind parallel zueinander in vertikaler Richtung angeordnet, stehen somit also rechtwinklig zu den werkzeugseitigen Führungen 101, 102, 103. Auch die versorgerseitigen Kupplungselemente 151, 152, 153, 154, 155, 156, 157, 158 sind durch einen ersten Antrieb, der ebenfalls je einen elektrischen Schrittmotor 171, 172, 173, 174, 175, 176, 177, 178 und einen Zahnriemen aufweist, auf den versorgerseitigen Führungen 141, 142, 143, 144, 145, 146, 147, 148 bewegbar. Die versorgerseitigen Elektromotoren 171, 172, 173, 174, 175, 176, 177, 178 sind an einem Ende der versorgerseitigen Führungen 141, 142, 143, 144, 145, 146, 147, 148 angeordnet. Die versorgerseitigen Kupplungselemente 151, 152, 153, 154, 155, 156, 157, 158 sind jeweils mit einem der versorgerseitigen Kabelsätze 61, 62, 63, 64, 65, 66, 67, 68 verbunden und somit den Versorgungseinheiten 21, 22, 23, 24, 25, 26, 27, 28 zugeordnet. Versorgerseitige Kabelsatzführungen 181, 182, 183, 184, 185, 186, 187, 188 führen die versorgerseitigen Kabelsätze 61, 62, 63, 64, 65, 66, 67, 68 zu den Versorgungseinheiten 21, 22, 23, 24, 25, 26, 27, 28 und sind in der Abdeckung 1 innerhalb des Anbaus 10 angeordnet.

Die werkzeugseitigen Kupplungselemente 111, 112, 113 und die versorgerseitigen Kupplungselemente 151, 152, 153, 154, 155, 156, 157, 158 sind somit in vierundzwanzig Kombinationen zu einer ebenso großen Anzahl von möglichen Kupplungseinheiten verbindbar, wobei gleichzeitig allerdings immer nur drei Kupplungseinheiten vorliegen können.

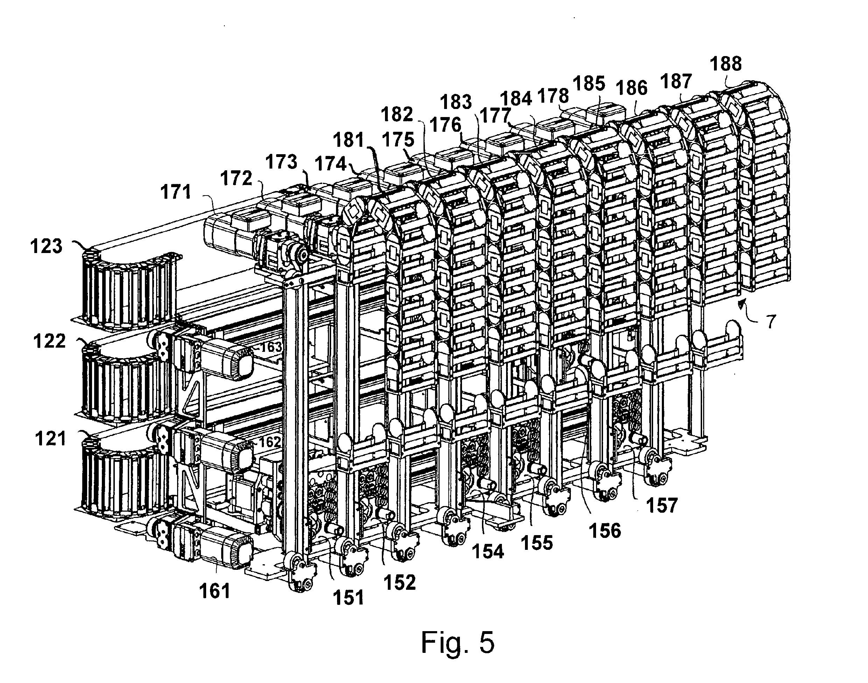

Fig. 5 zeigt in einer perspektivischen Darstellung das Multikupplungssystem 7 von der Versorgerseite aus. In dieser Ansicht sind auch die werkzeugseitigen Elektromotoren 161, 162, 163 des ersten Antriebs der werkzeugseitigen Kupplungselemente 111, 112, 113 zu erkennen. Die versorgerseitigen Führungen 141, 142, 143, 144, 145, 146, 147, 148 sind wie Zeilen einer Matrix angeordnet, während die werkzeugseitigen Führungen 101, 102, 103 wie Spalten einer Matrix angeordnet sind.

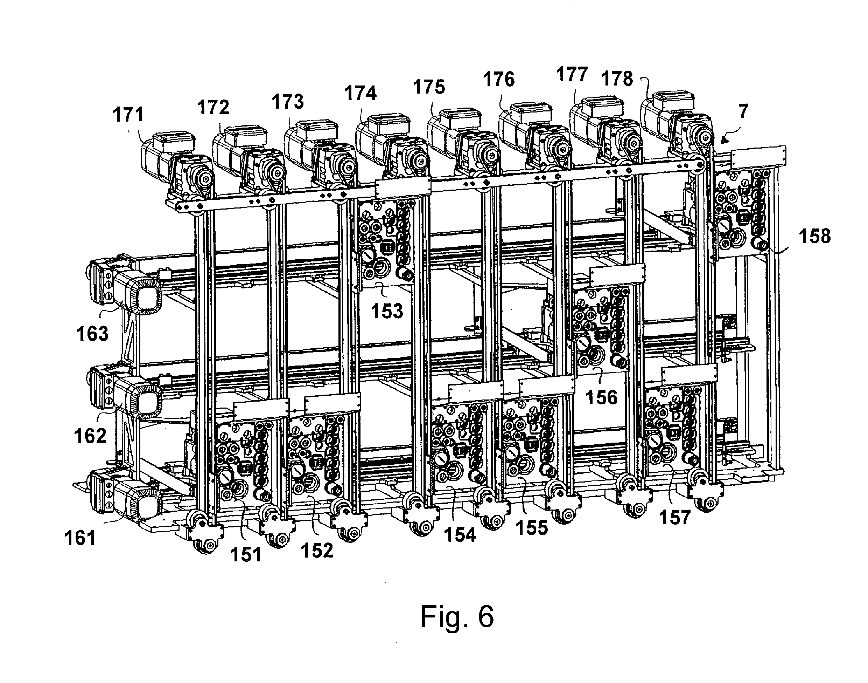

In Fig. 6 ist das Multikupplungssystem 7 von der Versorgerseite aus dargestellt, jedoch wurden aus Gründen einer verbesserten Übersicht die werkzeugseitigen Kabelsatzführung 121, 122, 123 und die versorgerseitigen Kabelsatzführungen 181, 182, 183, 184, 185, 186, 187, 188 weggelassen. In dieser Darstellung ist deutlicher zu erkennen, dass die versorgerseitigen Kupplungselemente 151, 152, 153, 154, 155, 156, 157, 158 jeweils eine Platte aufweisen, auf der die Anschlüsse angeordnet sind.

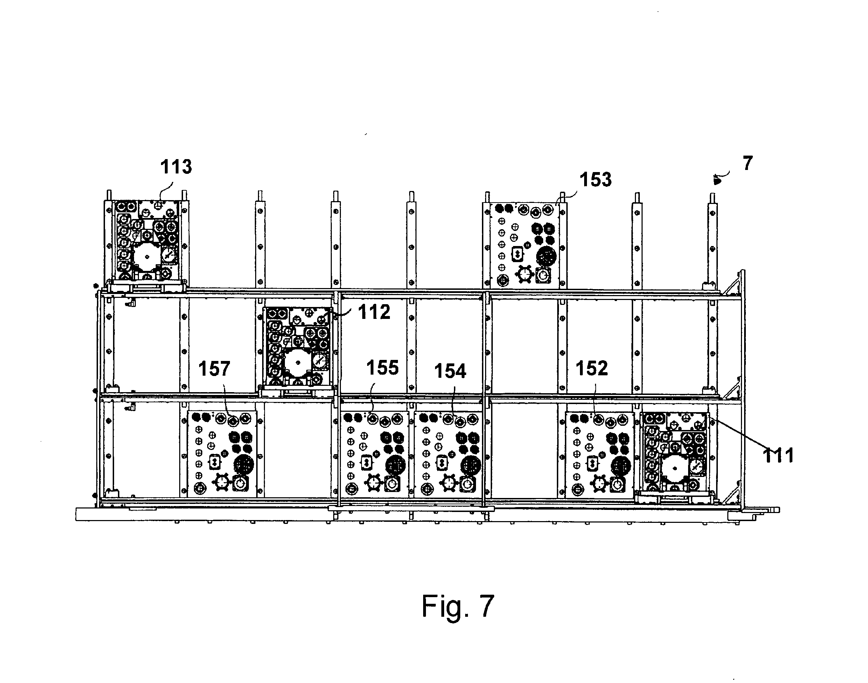

Die Anschlüsse der versorgerseitigen Kupplungselemente 151, 152, 153, 154, 155, 156, 157, 158 und der werkzeugseitigen Kupplungselemente 111, 112, 113 sind auch in Fig. 7 zu erkennen. Diese Figur zeigt eine Ansicht auf die Multikupplungsanordnung 7 von der den Werkzeugen zugewandten Seite aus, wobei lediglich die Kupplungselemente dargestellt sind. Die werkzeugseitigen Kupplungselemente 111, 112, 113 sind auf ihrer jeweiligen Führung 101, 102, 103 in jeweils acht Positionen bewegbar. Eine Anzahl der möglichen Positionen entspricht einer Anzahl von versorgerseitigen Kupplungselementen 151, 152, 153, 154, 155, 156, 157, 158. Dementsprechend sind die versorgerseitigen Kupplungselemente 151, 152, 153, 154, 155, 156, 157, 158 auf ihren versorgerseitigen Führungen 141, 142, 143, 144, 145, 146, 147, 148 in jeweils drei Positionen bewegbar. Die Positionen sind jeweils durch Rastvorrichtungen definiert, können in weiteren Ausführungsbeispielen aber natürlich auch ohne Rastvorrichtungen durch Abbremsen des ersten Antriebs angefahren werden.

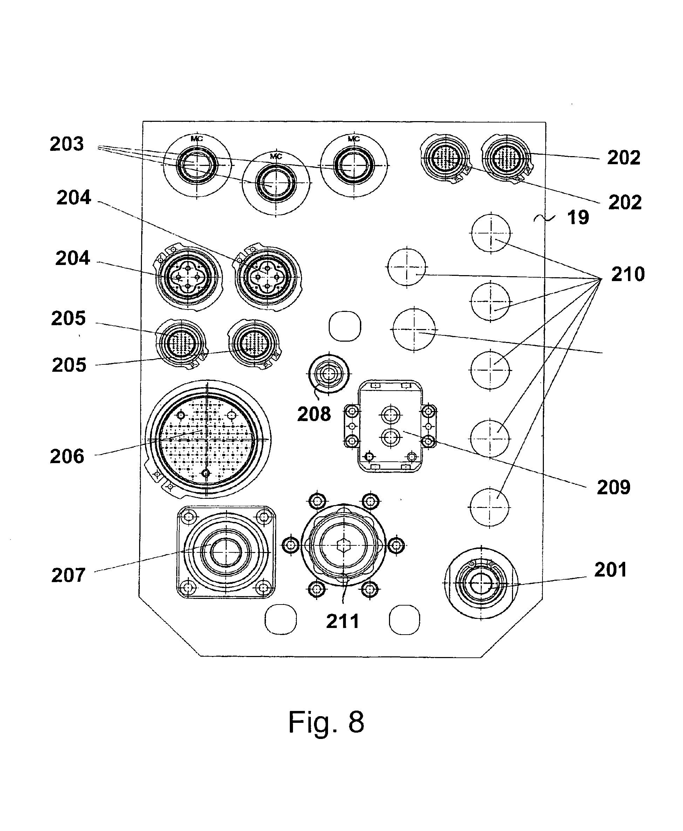

Fig. 8 zeigt eine der Platten 19 einer der werkzeugseitigen Kupplungselemente 151, 152, 153, 154, 155, 156, 157, 158 mit den darauf angeordneten Anschlüssen 201, 202, 203, 204, 205, 206, 207, 209, 211. Über die Anschlüsse sind verschiedene Medien leitbar, wobei die Medien unterschiedliche Parameter wie beispielsweise unterschiedliche Drücke, Stromstärken, Spannungen oder Temperaturen aufweisen können. Über den auf der Platte 19 rechts unten angeordneten Anschluss 201 ist ein Medium mit einem Druck bis zu 50 bar führbar. Die beiden rechts oben angeordneten Anschlüsse 202 sind Buchsen für eine Stromleitung, über die Ströme einer Spannung bis zu 250 V und einer Stromstärke bis zu 5 A geleitet werden können. Über die Anschlüsse 203, die auf der Platte 19 links oben angeordnet sind, kann das jeweilige Schweißwerkzeug mit einem Schweißstrom versorgt werden. Die unterhalb der Anschlüsse 203 angebrachten Anschlüsse 204 dienen ebenfalls der Leitung elektrischer Energie und sind für Spannungen bis 830 V und Ströme bis zu 32 A konzipiert. Mittig auf der linken Seite der Platte 19 befinden sich zwei weitere Stromanschlüsse 205, die die gleichen Eigenschaften wie die Anschlüsse 202 aufweisen. Unterhalb dieser Anschlüsse 205 ist eine Anschlussbuchse 206 für einen Signalstrom vorgesehen, der bis zu 16 A bei einer Spannung von 250 V betragen kann. Links unten befindet sich schließlich ein weiterer Medienanschluss 207, der für einen Druck bis maximal 420 bar ausgelegt ist. Schließlich ist ein Anschluss 209 für einen Lichtwellenleiter im Mittelteil der Platte 19 angebracht.

Die Platte 19 weist außerdem mittig einen von einer Oberfläche der Platte 19 wegweisenden Zapfen 208 auf, der in eine entsprechende Vertiefung einer Platte eines werkzeugseitigen Kupplungselements 111, 112, 113 eingeführt wird und sicherstellt, dass die Anschlüsse beider Kupplungselemente passgenau übereinander liegen. Die beschriebenen Anschlüsse sind auf einer korrespondierenden Platte eines werkzeugseitigen Kupplungselements derart angeordnet, dass eine Kupplungseinheit hergestellt werden kann, weisen allerdings jeweils Stecker anstatt Buchsen auf. Die Platte 19 weist zusätzlich noch mehrere Leerbohrungen 210 auf, die mit weiteren Buchsen oder Steckern versehen werden können. Eine pneumatisch betätigbare Verriegelung 211, welche sich mittig im unteren Teil der Platte 19 befindet, wird zum festen und gegen ungewolltes Lösen gesicherten Verbinden von werkzeugseitigen Kupplungselementen 111, 112, 113 und versorgerseitigen Kupplungselementen 151, 152, 153, 154, 155, 156, 157, 158 verwendet.

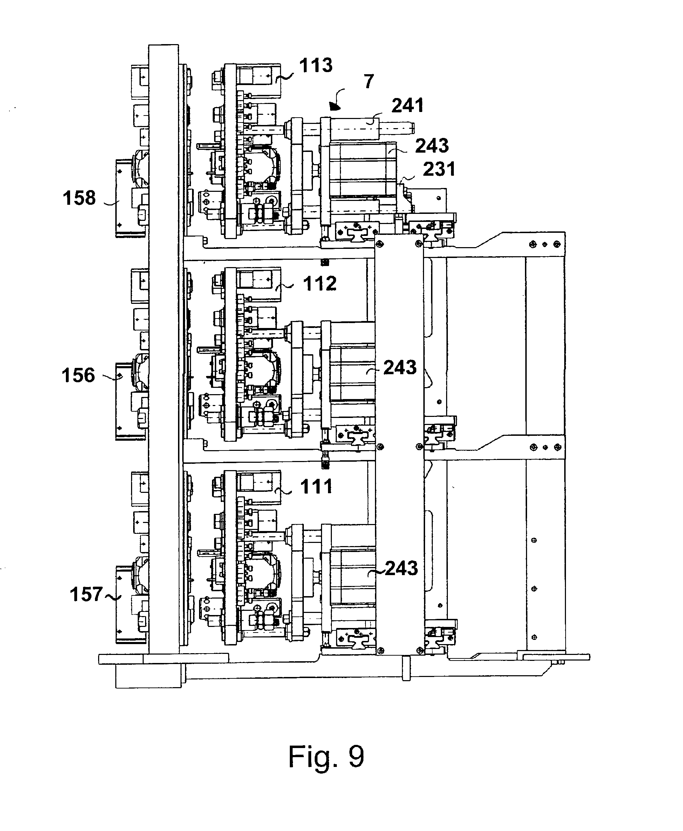

In Fig. 9 ist in einer seitlichen Ansicht das Multikupplungssystem 7 dargestellt. Die werkzeugseitigen Kupplungselemente 111, 112, 113 sind untereinander angeordnet, von den versorgerseitigen Kupplungselemente sind lediglich das Kupplungselement 157 in einer untersten Stellung dem werkzeugseitigen Kupplungselement 111 gegenüberliegend, das Kupplungselement 156 in einer mittleren Stellung dem Kupplungselement 112 gegenüberliegend und in einer oberen Stellung das Kupplungselement 158 dem Kupplungselement 113 gegenüberliegend dargestellt, während die restlichen versorgerseitigen Kupplungselement 151, 152, 153, 154, 155 bedingt durch die seitlich Darstellung verdeckt sind. Die werkzeugseitigen Kupplungselemente 111, 112, 113 und die ihnen gegenüberliegenden versorgerseitigen Kupplungselemente 156, 157, 158 sind noch nicht miteinander verbunden, bilden also keine Kupplungseinheiten.

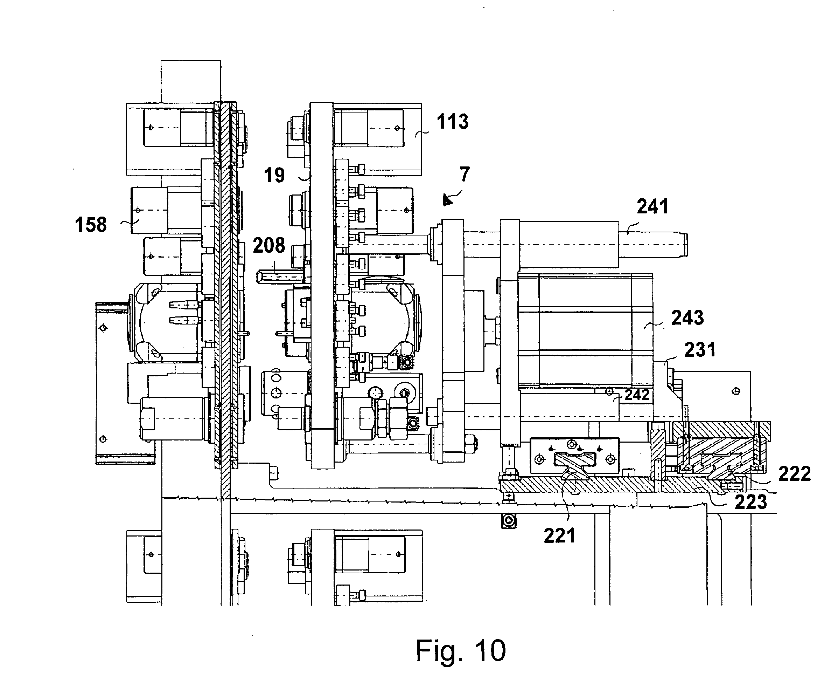

Fig. 10 stellt eine vergrößerte Ansicht des in Fig. 9 gezeigten versorgerseitigen Kupplungselements 158 und des werkzeugseitigen Kupplungselements 113 dar. Das werkzeugseitige Kupplungselement 113 ist auf einer Führungsschiene 223 als Teil der Führung 133 geführt. Die Führungsschiene 223 weist zwei parallel zueinander verlaufende, T-förmig gefräste Stege 221, 222 auf, die in Führungsnuten einer Haltevorrichtung 231 des werkzeugseitigen Kupplungselements 113 eingreifen und somit gleitbar gelagert ist. Die Führungsschiene 223 ebenso wie die Stege 221 und 222 bestehen aus Metall, sind jedoch aus Gründen einer einfacheren Wartung mit jeweils einer Kunststoffgleitleiste versehen. Die Haltevorrichtung 231 hält das werkzeugseitige Kupplungselement und ist aus Metall gefertigt, während die die Führungsnuten enthaltenden Teile der Haltevorrichtung 231 ebenfalls jeweils eine Kunststoffgleitleiste aufweisen, die jeweils auf den Kunststoffgleitleisten der Stege 221 und 222 aufliegen. Um das werkzeugseitige Kupplungselement 113 in einer Relativbewegung auf das versorgerseitige Kupplungselement 158 bewegen zu können und somit diese zu koppeln, weist die Haltevorrichtung 231 einen pneumatischen Zylinder 243 auf, der als zweiter Antrieb das werkzeugseitige Kupplungselement 113 von der Haltevorrichtung 231 wegbewegen oder an die Haltevorrichtung 231 heranbewegen kann. Zwei untereinander angeordnete Führungen 241, 242 zum Führen der Haltevorrichtung während einer durch den pneumatischen Zylinder 243 vermittelten Bewegung befinden sich an einem oberen Ende und an einem unteren Ende der Haltevorrichtung 231. Bei dieser Bewegung wird der Zapfen 208 der Platte 19 des werkzeugseitigen Kupplungselements 113 in eine korrespondierende Ausnehmung des versorgerseitigen Kupplungselements 158 eingeführt. In weiteren Ausführungsformen kann für den zweiten Antrieb auch ein elektrischer oder ein hydraulischer Antrieb verwendet werden.

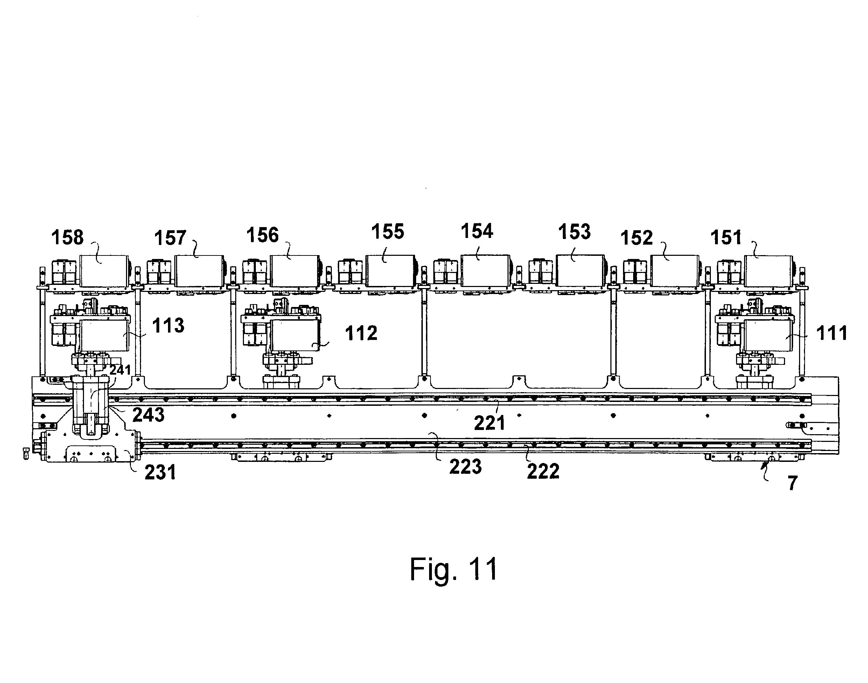

Fig. 11 stellt eine Aufsicht auf das Multikupplungssystem 7 dar. Der pneumatische Zylinder 243 ist mittig auf der Haltevorrichtung 231 unterhalb der Führung 241 und oberhalb der von dem pneumatischen Zylinder 243 verdeckten Führung 242 angeordnet, um das werkzeugseitige Kupplungselement 113 ohne Verkanten an das versorgerseitige Kupplungselement 158 schieben zu können. Die versorgerseitigen Kupplungselemente 151, 152, 152, 154, 155, 156, 157, 158 weisen keine Haltevorrichtung auf, sondern sind direkt über ihre jeweilige die Anschlüsse beinhaltende Platte seitlich über Führungsnuten in Führungsschienen der versorgerseitigen Führungen 141, 142, 143, 144, 145, 146, 147, 148 geführt.

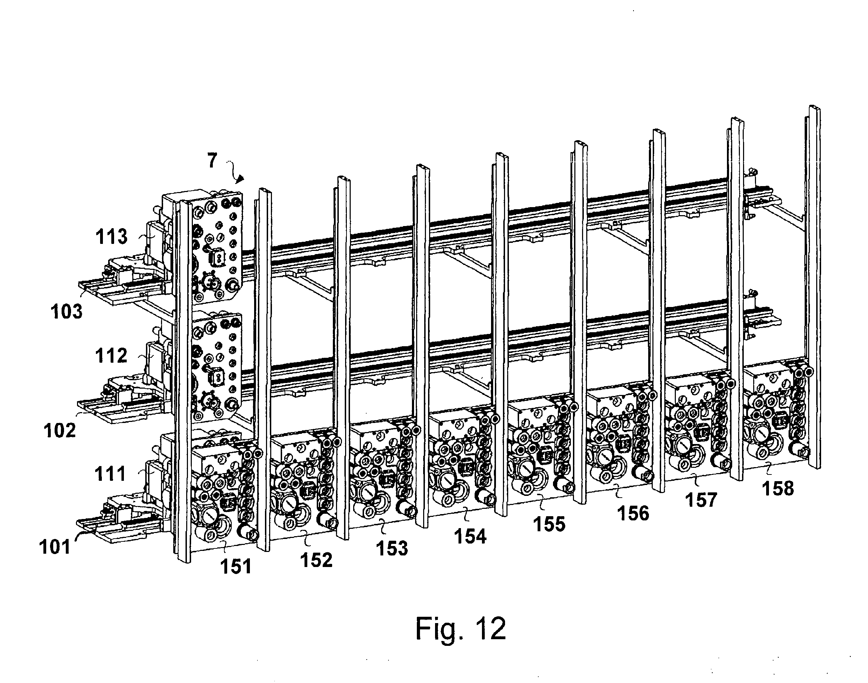

Die Fign. 12 bis 16 stellen verschiedene Verfahrensschritte eines Verfahrens zum Bedienen des Multikupplungssystems 7 dar. In Fig. 12 sind von der Versorgerseite aus gesehen die versorgerseitigen Kupplungselemente 151, 152, 152, 154, 155, 156, 157, 158 in der unteren Position angeordnet, die werkzeugseitigen Kupplungselemente 111, 112, 113 sind alle in einer am weitesten links an einem Rand der jeweiligen Führungen 131, 132, 133 liegenden Position befindlich. Das werkzeugseitige Kupplungselement 111 und das versorgerseitige Kupplungselement 151 liegen einander gegenüber, sind jedoch nicht zu einer Kupplungseinheit verbunden. Die Bewegungen aller Kupplungselemente auf ihren jeweiligen Führungen und der Relativbewegungen der werkzeugseitigen Kupplungselemente 111, 112, 113 in Richtung der versorgerseitigen Kupplungselement 151, 152, 152, 154, 155, 156, 157, 158, wie sie in den Fign. 12 bis 16 wiedergegeben sind, werden durch die Steuereinheit 230 gesteuert.

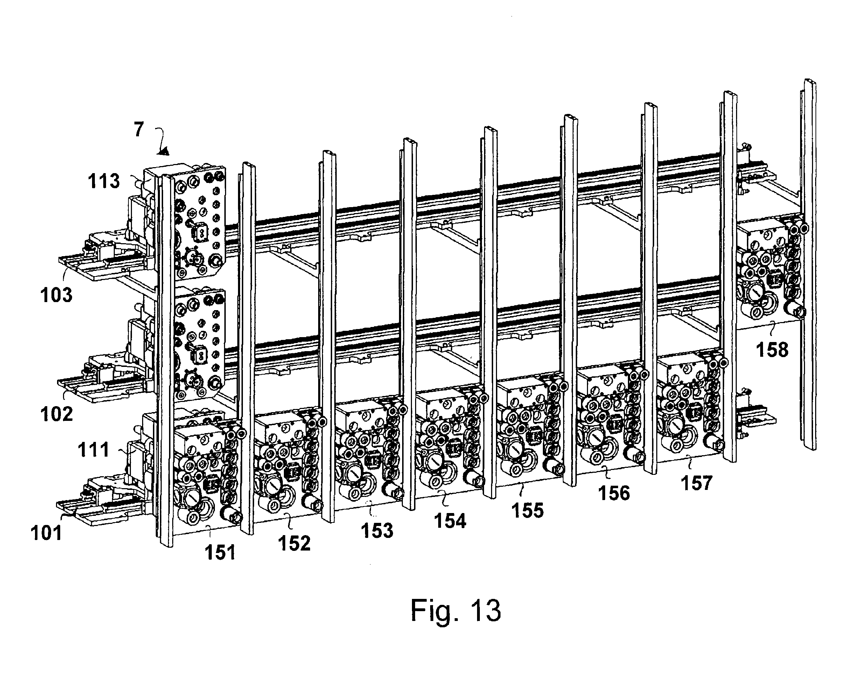

In Fig. 13 ist ein Zustand dargestellt, in dem die Steuereinheit 230 das versorgerseitige Kupplungselement 158 in eine mittlere Position verfahren hat. Alle anderen Kupplungselemente verbleiben in ihren in Fig. 12 dargestellten Positionen. Die Steuereinheit 230 verfügt hierzu über eine speicherprogrammierbare Steuerung (SPS). Statt lediglich eines der versorgerseitigen Kupplungselemente können natürlich auch mehrere versorgerseitige Kupplungselemente gleichzeitig bewegt werden. Es können auch mehrere werkzeugseitige Kupplungselemente gleichzeitig sowie zeitgleich mit versorgerseitigen Kupplungselementen bewegt werden.

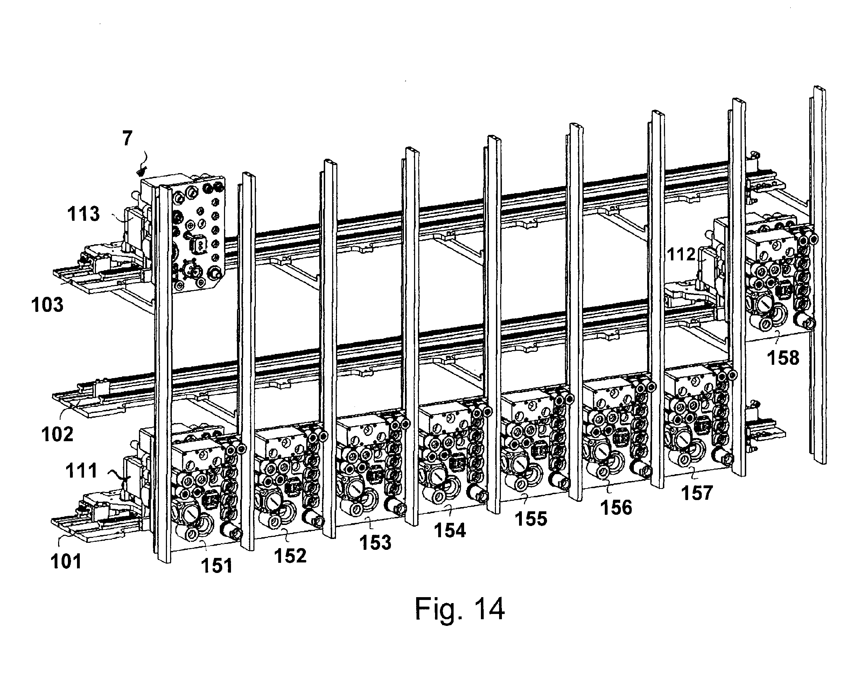

Fig. 14 stellt einen Zustand des Multikupplungssystems 7 dar, in dem auch das werkzeugseitige Kupplungselement 112 verfahren wurde. Das werkzeugseitige Kupplungselement 112 befindet sich nun an einem rechten Rand der Führung 102 und liegt dem versorgerseitigen Kupplungselement 158 gegenüber. Durch eine von dem pneumatischen Zylinder 243 als dem zweiten Antrieb ausgeübte Relativbewegung des werkzeugseitigen Kupplungselements 112 in Richtung des versorgerseitigen Kupplungselements 158, die wiederum von der Steuereinheit 230 gesteuert wird, sind das versorgerseitige Kupplungselement 158 und das werkzeugseitige Kupplungselement 112 zu einer Kupplungseinheit verbunden.

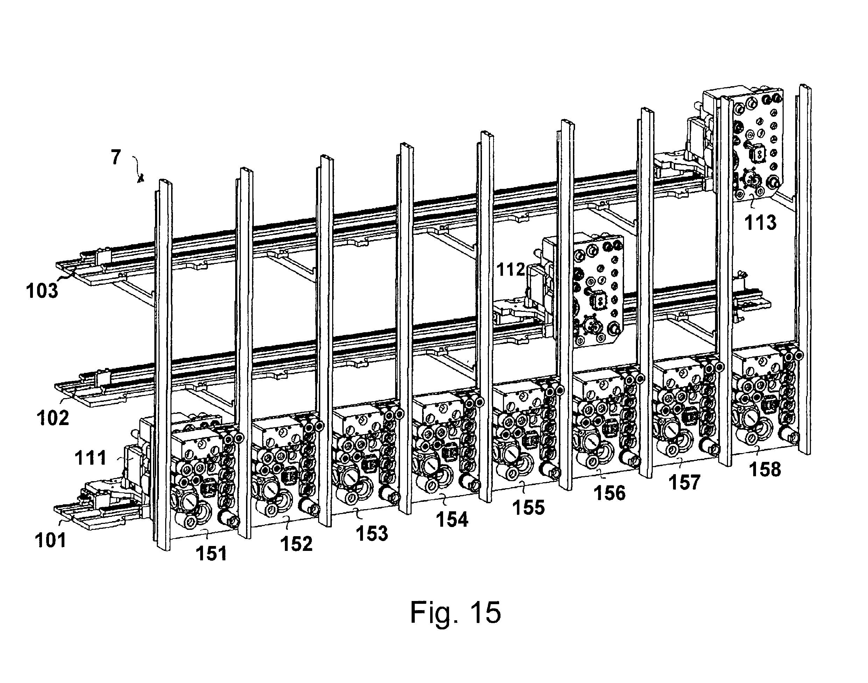

In Fig. 15 ist diese Kupplungseinheit aus dem versorgerseitige Kupplungselement 158 und dem werkzeugseitige Kupplungselement 112 durch eine Relativbewegung des werkzeugseitigen Kupplungselements 112 weg von dem versorgerseitigen Kupplungselement 158 getrennt und das versorgerseitige Kupplungselement 158 in die unterste Position zurückgefahren worden. Diese Trennung erfolgt, nachdem das Werkzeug die ihm zugedachte Aufgabe erledigt hat und ein neues Werkzeug von dem Roboter benötigt wird. Das werkzeugseitige Kupplungselement 113 ist nun an den rechten Rand der Führung 103 bewegt worden und das werkzeugseitige Kupplungselement 112 in eine der mittleren Positionen der Führung 102. Die restlichen Kupplungselemente befinden sich an ihren vorherigen Positionen.

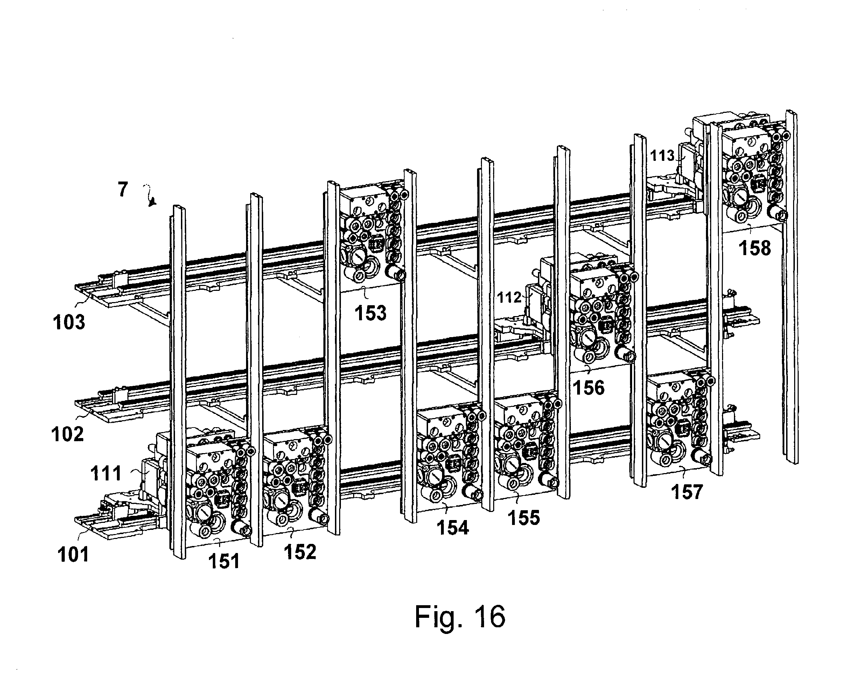

In Fig. 16 wurde das versorgerseitige Kupplungselement 158 in die obere Position verfahren und liegt nun dem werkzeugseitigen Kupplungselement 113 gegenüber. Das versorgerseitige Kupplungselement 156 wurde in die mittlere Position verfahren und befindet sich hier dem werkzeugseitigen Kupplungselement 112 gegenüber. Außerdem wurde in Vorbereitung einer in einem weiteren Verfahrensschritt erfolgenden Kupplung des werkzeugseitigen Kupplungselements 113 mit dem versorgerseitigen Kupplungselement 153 dieses versorgerseitige Kupplungselement 153 in die obere Position bewegt. Ein Zeitraum zwischen dem Trennen der aus dem werkzeugseitigen Kupplungselement 132 und dem versorgerseitigen Kupplungselement 158 bestehenden Kupplungseinheit, einem Verfahren der Kupplungselemente und einem Kuppeln des werkzeugseitigen Kupplungselements 112 mit dem versorgerseitigen Kupplungselement 151 zu einer weiteren Kupplungseinheit beträgt 10 s. Sofern das werkzeugseitige Kupplungselement 112 auf der werkzeugseitigen Führung 102 nicht eine volle Länge der Führung 102 abfahren muss, beträgt der Zeitraum bis zum erneuten Bilden einer weiteren Kupplungseinheit entsprechend weniger Sekunden, beispielsweise nur 3 s zum Erreichen des in Fig. 16 gezeigten Zustands.

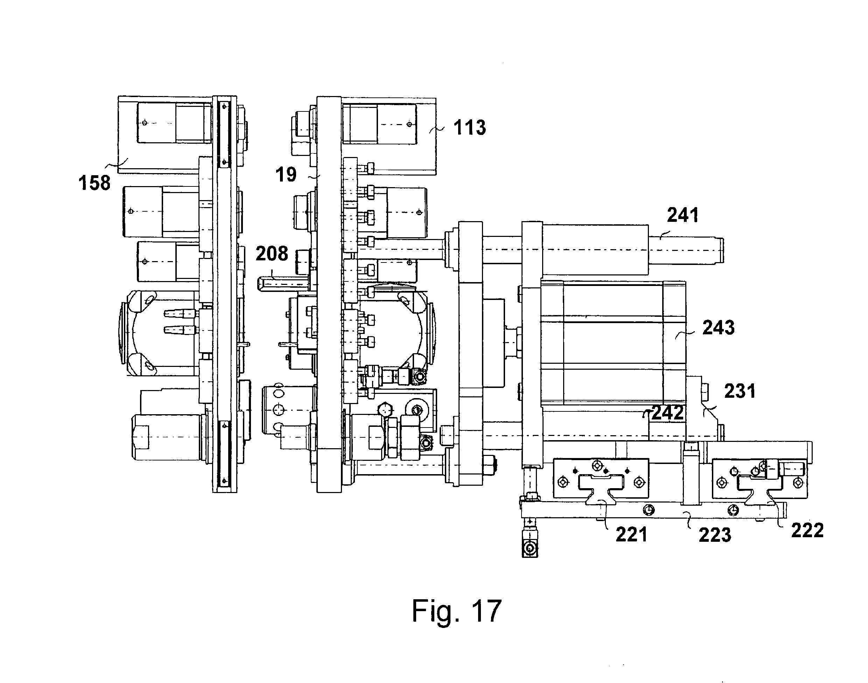

In den Fign. 17 bis 19 sind in einer Fig. 10 entsprechenden Darstellung das versorgerseitige Kupplungselement 158 und das werkzeugseitige Kupplungselement 113 bei einem Kupplungsvorgang dargestellt. In Fig. 17 liegen sich das versorgerseitige Kupplungselement 158 und das werkzeugseitige Kupplungselement 113 gegenüber und weisen einen maximalen Abstand bei einer gegenüberliegenden Positionierung auf. Der pneumatische Zylinder 243 drückt das werkzeugseitige Kupplungselement 113 in Richtung des versorgerseitigen Kupplungselements 158. Natürlich kann in weiteren Ausführungsformen der erste Antrieb zum Ausführen dieser Relativbewegung auch an den versorgerseitigen Kupplungselementen 151, 152, 153, 154, 155, 156, 157, 158 angebracht sein oder jedes der versorgerseitigen Kupplungselementen 151, 152, 153, 154, 155, 156, 157, 158 und der werkzeugseitigen Kupplungselemente 111, 112, 113 einen derartigen ersten Antrieb aufweisen.

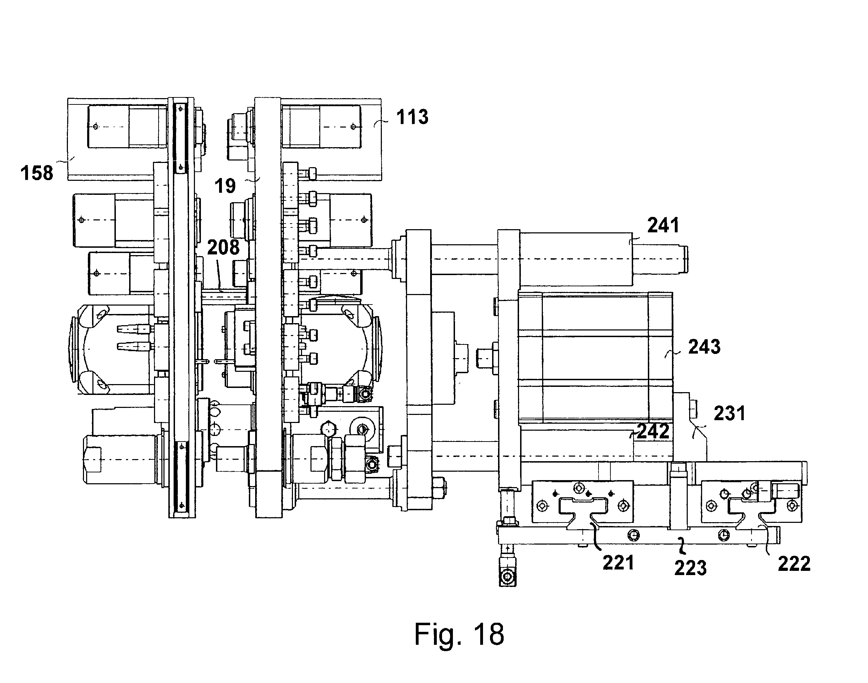

In Fig. 18 ist ein Zustand gezeigt, in dem sich der Abstand zwischen dem versorgerseitige Kupplungselement 158 und dem werkzeugseitigen Kupplungselement 113 bereits verringert hat, der Zapfen 208 teilweise in die korrespondierende Ausnehmung eingeführt ist und als weitere Führung zum Stabilisieren der Relativbewegung des werkzeugseitigen Kupplungselements 113 dient.

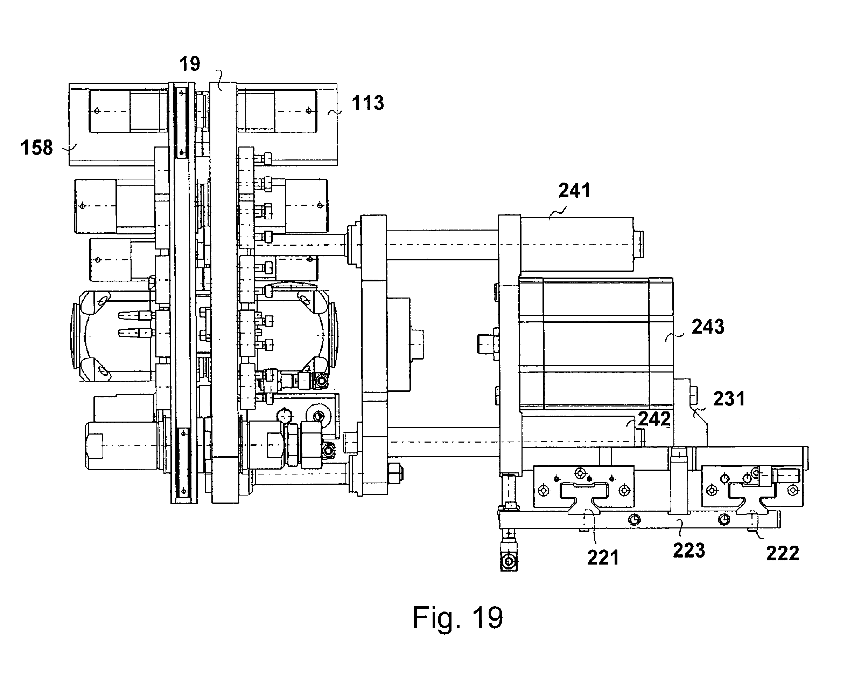

Fig. 19 stellt die aus dem versorgerseitigen Kupplungselement 158 und dem werkzeugseitigen Kupplungselement 113 gebildete Kupplungseinheit dar. Das werkzeugseitige Kupplungselement 113 und das versorgerseitige Kupplungselement 158 befinden sich nun in einem minimalen Abstand zueinander, d. h. der pneumatische Zylinder 243 bewegt solange das werkzeugseitige Kupplungselement 113, bis ein Anschlag erreicht und durch einen Sensor detektiert. Die Buchsen der an der Platte 19 befestigten Anschlüsse des werkzeugseitigen Kupplungselements 113 sind nun mit korrespondieren Steckern des versorgerseitigen Kupplungselements 158 verbunden. Die Kupplungseinheit ist in diesem Zustand durch die Steuereinheit 230 verriegelbar, beispielsweise durch eine Arretierung des pneumatischen Zylinders oder durch die mechanische Verriegelung 211 an der Platte 19. Eine feste Verriegelung kann in einer weiteren Ausführungsform auch bereits durch eine Verbindung der jeweiligen Anschlüsse beim Bilden einer Kupplungseinheit erreicht werden.

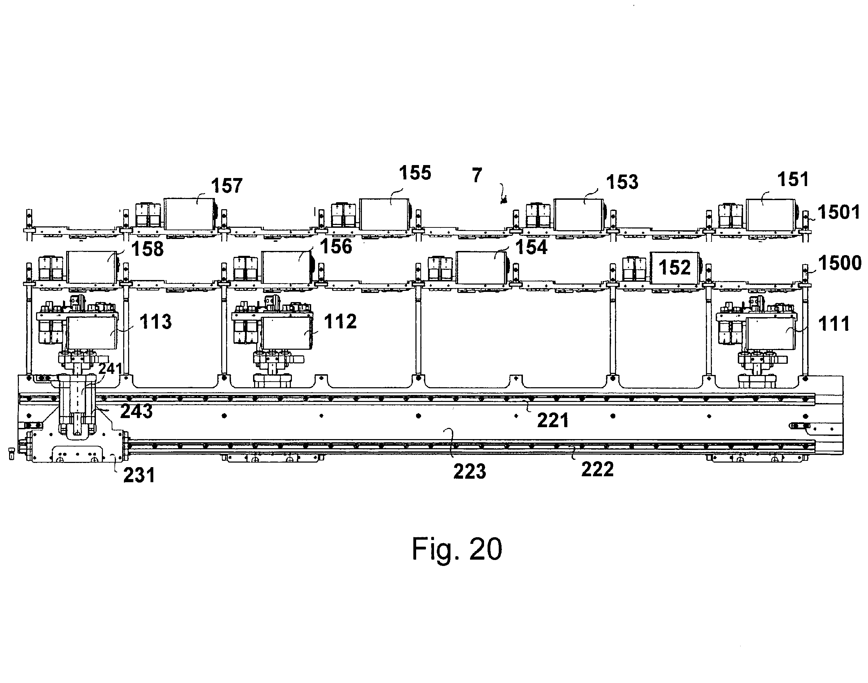

Fig. 20 stellt in einer Fig. 11 entsprechenden Ansicht eine weitere Ausführungsform des Multikupplungssystems 7 dar. Im Gegensatz zu der in Fig. 11 gezeigten Ausführungsform sind die versorgerseitigen Kupplungselemente 151, 152, 153, 154, 155, 156, 157, 158 nun auf zwei hintereinander angeordneten Modulen 1500 und 1501 angeordnet, die parallel zueinander liegen. Die versorgerseitigen Kupplungselemente 152, 154, 156, 158 sind auf dem ersten Modul 1500, die versorgerseitigen Kupplungselement 151, 153, 155, 157 auf dem zweiten Modul 1501 angeordnet. Die Positionen der versorgerseitigen Kupplungselemente 151, 152, 153, 154, 155, 156, 157, 158 auf den beiden Modulen 1500, 1501 sind jeweils versetzt zueinander. Die werkzeugseitigen Kupplungselemente 111, 112, 113 können somit eines der versorgerseitigen Kupplungselemente 152, 154, 156, 158 des ersten Moduls 1500 zum Bilden einer Kupplungseinheit kontaktieren oder durch Aussparungen des ersten Moduls 1500 hindurchfahren und eines der versorgerseitigen Kupplungselemente 151, 153, 155, 157 des zweiten Moduls 1501 kontaktieren. Hierzu muss ein Verfahrweg der werkzeugseitigen Kupplungselemente 111, 112, 113 natürlich entsprechend angepasst und verlängert werden. Natürlich können auch die werkzeugseitigen Kupplungselemente 111, 112, 113 auf verschiedene Module aufgeteilt werden. Durch einen modularen Aufbau des Multikupplungssystems 7 sind einzelne Module und die darauf angeordneten Kupplungselemente schnell austauschbar und eine Variabilität des Multikupplungssystems 7 erhöht sich.

In einer weiteren Ausführungsform ist es auch möglich, die Module 1500, 1501 auf verschiedenen Seiten der Führungsschiene 223 anzuordnen, wobei dann in der in Fig. 20 gezeigten Anordnung auch mindestens eines der werkzeugseitigen Kupplungselemente 111, 112, 113 in eine entgegengesetzte Richtung weisen muss.

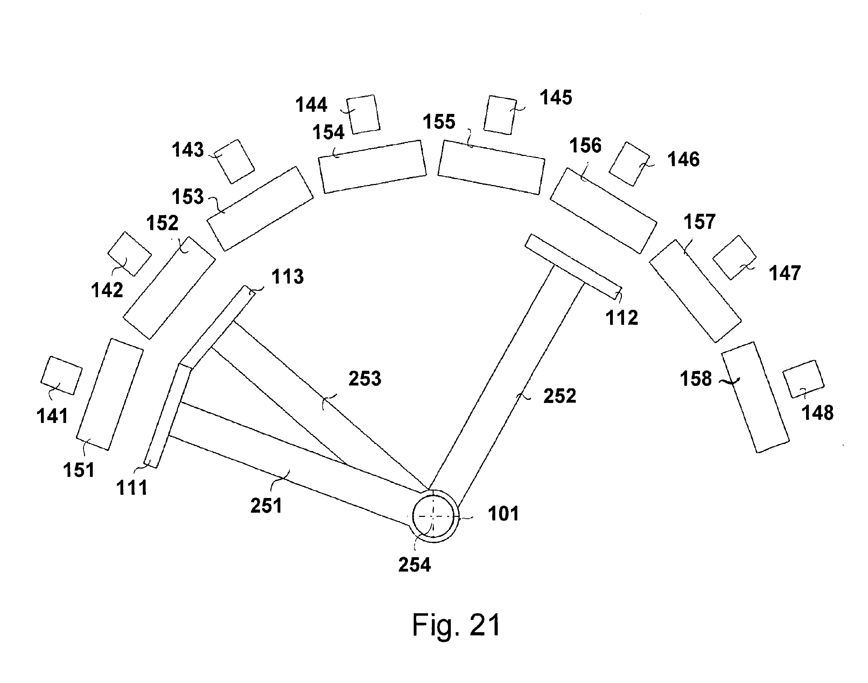

In Fig. 21 ist in einer Aufsicht schematisch eine weitere Ausführungsform des Multikupplungssystems 7 dargestellt. Die werkzeugseitigen Führungen 101, 102, 103 sind nun radial beweglich ausgeführt, sodass die untereinander angeordneten werkzeugseitigen Kupplungselemente 111, 112, 113 in einer Kreisbewegung jeweils in unterschiedlicher Höhe geführt werden. Hierzu sind die die werkzeugseitigen Kupplungselemente 111, 112, 113 über jeweils einen Führungsarm 251, 252, 253 der werkzeugseitigen Führungen 101, 102, 103 mit einer Führungssäule 254 verbunden und um diese Führungssäule in verschiedene Positionen drehbar. In einer karussellförmigen Anordnung sind um die radiale Führung 101 die versorgerseitigen Kupplungselemente 151, 152, 153, 154, 155, 156, 157, 158 angeordnet, die höhenverstellbar auf versorgerseitigen Führungen 141, 142, 143, 144, 145, 146, 147, 148 geführt sind und somit mit einem der werkzeugseitigen Kupplungselemente 111, 112, 113 zu Kupplungseinheiten zusammenfügbar sind. Hierzu wird eines der versorgerseitigen Kupplungselemente 151, 152, 153, 154, 155, 156, 157, 158 so verfahren, dass es auf gleicher Höhe mit einer Führung 101, 102, 103 eines der werkzeugseitigen Kupplungselemente 111, 112, 113 liegt. Das auf dieser Führung bewegbare werkzeugseitige Kupplungselement wird anschließend so auf der Führung gedreht, dass sich das werkzeugseitige Kupplungselement und das versorgerseitige Kupplungselement gegenüberliegen und eine Kupplungseinheit bilden können.

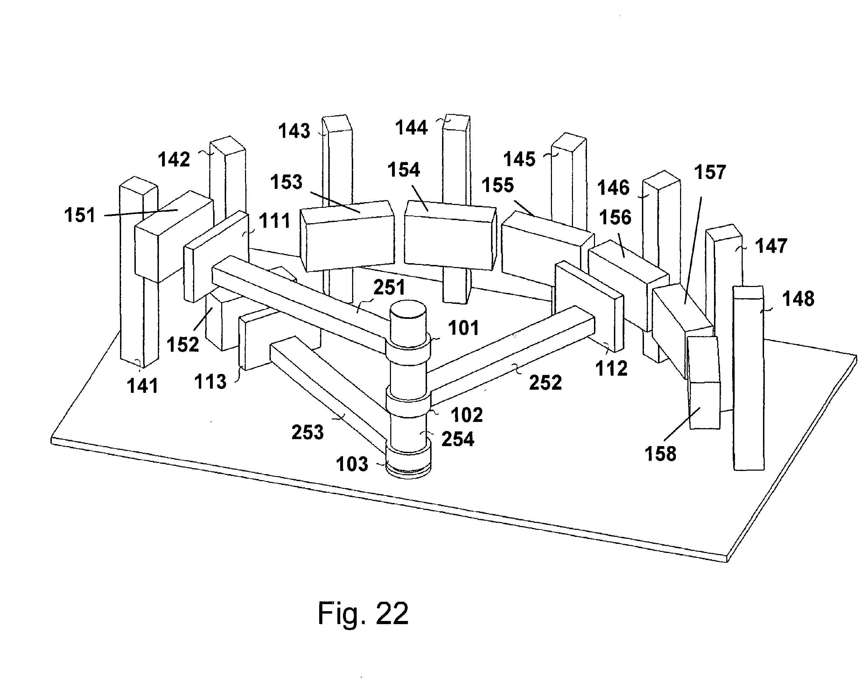

In Fig. 22 ist die in Fig. 21 bereits dargestellte karussellförmige Anordnung in perspektivischer Ansicht wiedergegeben. Die radialen werkzeugseitigen Führungen 101, 102, 103 sind untereinander angeordnet auf einer Führungssäule 254 und liegen horizontal, während die Führungssäule in vertikaler Richtung und somit parallel zu den versorgerseitigen Führungen 141, 142, 143, 144, 145, 146, 147, 148 verläuft. Auf jeder der radialen werkzeugseitigen Führungen 101, 102, 103 ist eines der werkzeugseitigen Kupplungselemente 111, 112, 113 auf einer Kreisbahn führbar. Im Halbkreis um die radialen werkzeugseitigen Führungen 101, 102, 103 sind versorgerseitige Führungen 141, 142, 143, 144, 145, 146, 147, 148 angeordnet. Auf jeder dieser versorgerseitigen Führungen 141, 142, 143, 144, 145, 146, 147, 148 ist ein versorgerseitiges Kupplungselement 151, 152, 153, 154, 155, 156, 157, 158 bewegbar. Durch Drehen eines der werkzeugseitigen Kupplungselemente 111, 112, 113 und Verfahren eines der versorgerseitigen Kupplungselemente 151, 152, 153, 154, 155, 156, 157, 158 auf eine passende Höhe sind in dem in Fig. 22 dargestellten Ausführungsbeispiel Kupplungseinheiten herstellbar. Alternativ können auch die versorgerseitigen Führungen 141, 142, 143, 144, 145, 146, 147, 148 in jeweils verschiedenen Höhen an der Drehsäule 254 angeordnet und um die Drehsäule 254 drehbar sein und die werkzeugseitigen Kupplungselemente 111, 112, 113 auf den werkzeugseitigen Führungen 101, 102, 103 höhenverstellbar angeordnet sein.

Lediglich in den Ausführungsbeispielen offenbarte Merkmale der verschiedenen Ausführungsformen können miteinander kombiniert und einzeln beansprucht werden.

## Patentansprüche

1. Multikupplungssystem (7) zum Verbinden von mehreren von mindestens zwei Robotern (41, 42, 43) jeweils aufnehmbaren und an den mindestens zwei Robotern (41, 42, 43) befestigbaren Werkzeugen (31, 32, 33, 34, 35, 36, 37, 38) mit mindestens einer Versorgungseinheit (21, 22, 23, 24, 25, 26, 27, 28), die eine Mehrzahl von Medien zur Versorgung der Werkzeuge (31, 32, 33, 34, 35, 36, 37, 38) bereitstellt, umfassend mehrere jeweils auf einer werkzeugseitigen Führung (101, 102, 103) bewegbare werkzeugseitige Kupplungselemente (111, 112, 113), die Anschlüsse (201, 202, 203, 204, 205, 206, 207, 209, 211) für die Medien aufweisen, die die jeweils an den Robotern (41, 42, 43) befestigbaren Werkzeuge (31, 32, 33, 34, 35, 36, 37, 38) versorgen, und mehrere jeweils auf einer versorgerseitigen Führung (141, 142, 14,3 144, 145, 146, 147, 148) bewegbare versorgerseitige Kupplungselemente (151, 152, 153, 154, 155, 156, 157, 158) mit einer Mehrzahl von Anschlüssen (201, 202, 203, 204, 205, 206, 207, 209, 211), wobei die Anschlüsse (201, 202, 203, 204, 205, 206, 207, 209, 211) entsprechend mit denjenigen Medien belegt sind, mit denen die unterschiedlichen an den Robotern (41, 42, 43) befestigbaren Werkzeuge (31, 32, 33, 34, 35, 36, 37, 38) zu versorgen sind, wobei die werkzeugseitigen Führungen (101, 102, 103) und die versorgerseitigen Führungen (141, 142, 14,3 144, 145, 146, 147, 148) in unterschiedlichen Richtungen verlaufen und wobei die werkzeugseitigen Kupplungselemente (111, 112, 113) und die versorgerseitigen Kupplungselemente (151, 152, 153, 154, 155, 156, 157, 158) auf ihren jeweiligen Führungen in Positionen bewegbar sind, in denen jeweils ein versorgerseitiges Kupplungselement (151, 152, 153, 154, 155, 156, 157, 158) und ein werkzeugseitiges Kupplungselement (111, 112, 113) einander gegenüberliegen und durch eine Relativbewegung in Richtung des jeweils anderen Kupplungselements miteinander zu einer Kupplungseinheit zusammenfügbar sind.

2. Multikupplungssystem (7) nach Anspruch 1, **dadurch gekennzeichnet, dass** die werkzeugseitigen Führungen (101, 102, 103) und/oder die versorgerseitigen Führungen (141, 142, 14,3 144, 145, 146, 147, 148) jeweils parallel zueinander angeordnet sind.

3. Multikupplungssystem (7) nach Anspruch 1 oder Anspruch 2, **dadurch gekennzeichnet, dass** die werkzeugseitigen Führungen (101, 102, 103) und die versorgerseitigen Führungen (141, 142, 14,3 144, 145, 146, 147, 148) rechtwinklig zueinander angeordnet sind.

4. Multikupplungssystem (7) nach einem der vorhergehenden Ansprüche, **dadurch gekennzeichnet, dass** die versorgerseitigen Führungen (141, 142, 14,3 144, 145, 146, 147, 148) oder die werkzeugseitigen Führungen (101, 102, 103) radial verlaufen.

5. Multikupplungssystem (7) nach einem der vorhergehenden Ansprüche, **dadurch gekennzeichnet, dass** es zum Ansteuern und Bewegen der werkzeugseitigen Kupplungselemente (111, 112, 113) und der versorgerseitigen Kupplungselemente (151, 152, 153, 154, 155, 156, 157, 158) eine Steuereinheit (230) aufweist.

6. Multikupplungssystem (7) nach einem der vorhergehenden Ansprüche, **dadurch gekennzeichnet, dass** die Anschlüsse (201, 202, 203, 204, 205, 206, 207, 209, 211) mindestens einen Anschluss für einen Strom, vorzugsweise einen Leistungsstrom oder einen Steuerstrom, eine Spannung, Luft, Wasser, ein Kühlmedium, eine Hydraulikflüssigkeit und/oder einen Lichtwellenleiter umfassen.

7. Multikupplungssystem (7) nach einem der vorhergehenden Ansprüche, **dadurch gekennzeichnet, dass** es einen ersten Antrieb zum Bewegen der werkzeugseitigen Kupplungselemente (111, 112, 113) auf den jeweiligen werkzeugseitigen Führungen (101, 102, 103) und/oder der versorgerseitigen Kupplungselemente (151, 152, 153, 154, 155, 156, 157, 158) auf den jeweiligen versorgerseitigen Führungen (141, 142, 14,3 144, 145, 146, 147, 148) umfasst.

8. Multikupplungssystem (7) nach Anspruch 7, **dadurch gekennzeichnet, dass** der erste Antrieb einen von einem Elektromotor (161, 162, 163, 171, 172, 173, 174, 175, 176, 177, 178) angetriebenen Zahnriemen (131, 132, 133), eine von dem Elektromotor (161, 162, 163, 171, 172, 173, 174, 175, 176, 177, 178) angetriebene Spindel, einen pneumatischen Antrieb oder einen hydraulischen Antrieb umfasst.

9. Multikupplungssystem (7) nach einem der vorhergehenden Ansprüche, **dadurch gekennzeichnet, dass** es zum Durchführen der Relativbewegung zum Bilden oder Trennen einer Kupplungseinheit einen zweiten Antrieb aufweist, welcher an mindestens einem der Kupplungselemente angeordnet ist.

10. Multikupplungssystem (7) nach Anspruch 9, **dadurch gekennzeichnet, dass** der zweite Antrieb einen pneumatisch betriebenen Zylinder (241, 242), einen elektrischen Antrieb oder einen hydraulischen Antrieb aufweist.

11. Multikupplungssystem (7) nach einem der vorhergehenden Ansprüche, **dadurch gekennzeichnet, dass** die als Kupplungseinheiten zusammengefügten werkzeugseitigen Kupplungselemente (111, 112, 113) und die versorgerseitigen Kupplungselemente (151, 152, 153, 154, 155, 156, 157, 158) miteinander verriegelbar sind.

12. Verfahren zum Betreiben eines Multikupplungssystems (7) zum Verbinden von mehreren von mindestens zwei Robotern (41, 42, 43) jeweils aufnehmbaren und an den mindestens zwei Robotern (41, 42, 43) befestigbaren Werkzeugen (31, 32, 33, 34, 35, 36, 37, 38) mit mindestens einer Versorgungseinheit (21, 22, 23, 24, 25, 26, 27, 28), wobei das Multikupplungssystem (7) mehrere jeweils auf einer werkzeugseitigen Führung (101, 102, 103) bewegbare werkzeugseitige Kupplungselemente (111, 112, 113), die Anschlüsse (201, 202, 203, 204, 205, 206, 207, 209, 211) für die Medien aufweisen, die die jeweils an den Roboter (41, 42, 43) befestigbaren Werkzeuge (31, 32, 33, 34, 35, 36, 37, 38) versorgen, und mehrere jeweils auf einer versorgerseitigen Führung (141, 142, 14,3 144, 145, 146, 147, 148) bewegbare versorgerseitige Kupplungselemente (151, 152, 153, 154, 155, 156, 157, 158) mit einer Mehrzahl von Anschlüssen (201, 202, 203, 204, 205, 206, 207, 209, 211) aufweist, wobei die Anschlüsse (201, 202, 203, 204, 205, 206, 207, 209, 211) entsprechend mit denjenigen Medien belegt sind, mit denen die unterschiedlichen an den Robotern (41, 42, 43) befestigbaren Werkzeuge (31, 32, 33, 34, 35, 36, 37, 38) zu versorgen sind, umfassend die Schritte:
a) Bewegen mindestens eines der werkzeugseitigen Kupplungselemente (111, 112, 113) und/oder mindestens eines der versorgerseitigen Kupplungselemente (151, 152, 153, 154, 155, 156, 157, 158) auf der jeweiligen Führung derart, dass das mindestens eine werkzeugseitige Kupplungselement (111, 112, 113) und das mindestens eine versorgerseitige Kupplungselement (151, 152, 153, 154, 155, 156, 157, 158) einander gegenüberliegen;
b) Zusammenfügen des mindestens einen werkzeugseitigen Kupplungselements (111, 112, 113) und des mindestens einen versorgerseitigen Kupplungselements (151, 152, 153, 154, 155, 156, 157, 158) zu einer Kupplungseinheit durch eine Relativbewegung mindestens eines der beiden Kupplungselemente in Richtung des jeweils anderen Kupplungselements;
c) Trennen der Kupplungseinheit durch eine Relativbewegung mindestens eines der beiden Kupplungselemente in eine von dem jeweils anderen der beiden Kupplungselemente wegweisenden Richtung;
d) Bewegen des mindestens einen werkzeugseitigen Kupplungselements (111, 112, 113) und/oder des mindestens einen versorgerseitigen Kupplungselements (151, 152, 153, 154, 155, 156, 157, 158) auf der jeweiligen Führung derart, dass zumindest eines der beiden Kupplungselemente einem weiteren Kupplungselement der jeweils anderen Art gegenüberliegt und mit diesem weiteren Kupplungselement zu einer weiteren Kupplungseinheit zusammenfügbar ist.

13. Verfahren nach Anspruch 12, **dadurch gekennzeichnet, dass** eine Zeit zwischen dem Trennen des mindestens einen werkzeugseitigen Kupplungselements (111, 112, 113) und des mindestens einen versorgerseitigen Kupplungselements (151, 152, 153, 154, 155, 156, 157, 158) und dem Koppeln des mindestens einen werkzeugseitigen Kupplungselements (111, 112, 113) und/oder des mindestens einen versorgerseitigen Kupplungselements mit einem weiteren Kupplungselement der jeweils anderen Art maximal 10 Sekunden beträgt.
